# EUROPEAN PATENT SPECIFICATION

(11) **EP 3 587 090 B1**
(45) Date of publication and mention of the grant of the patent: **12.05.2021**
(21) Application number: 18184515.7
(22) Date of filing: 19.07.2018
(51) Int. Cl.: B29C 70/50

(54) **METHOD AND APPARATUS FOR MANUFACTURING A SHEET MOULDING COMPOUND (SMC)**
VERFAHREN UND VORRICHTUNG ZUR HERSTELLUNG VON SMC
PROCÉDÉ ET APPAREIL DE FABRICATION DE SMC

(30) Priority: 26.06.2018 KR 20180073274
(43) Date of publication of application: 01.01.2020
(73) Proprietor: Il Sung Machinery Co., Ltd., Gyeongsangbuk-do 39367 (KR)
(72) Inventor: KIM, Ki Young, 42114 Suseong-gu, Daegu (KR)
(74) Representative: dompatent von Kreisler Selting Werner - Partnerschaft von Patent- und Rechtsanwälten mbB

(56) References cited:
- EP-A2- 1 434 689
- WO-A1-2017/069153
- KR-A- 20170 103 131
- US-A- 3 558 380
- US-A1- 2012 213 997

## Description

### CROSS REFERENCE TO RELATED APPLICATION

The present application claims priority to Korean Patent Application No. 10-2018-0073274, filed June 26, 2018.

### BACKGROUND OF THE INVENTION

### Field of the Invention

The present invention relates generally to a method of and an apparatus for manufacturing a sheet molding compound (SMC). More particularly, the present invention relates to a method of and apparatus for manufacturing an SMC, the method and the apparatus capable of improving resin impregnability by spreading a large tow carbon fiber to increase the width thereof, whereby it is possible to manufacture a high-quality SMC having improved physical properties with low cost.

### Description of the Related Art

A sheet molding compound (SMC) sheet is known in which cut glass fiber, etc. is distributed on a sheet body made of thermosetting resin. The SMC is configured with multiple plastic film layers and a fiber-reinforced layer interposed between the film layers.

The SMC is widely used as a composite material for manufacturing architectural, automobile, and various industrial products because the SMC has excellent heat resistance, flexibility, and moisture resistance as well as excellent physical properties and electrical insulation properties.

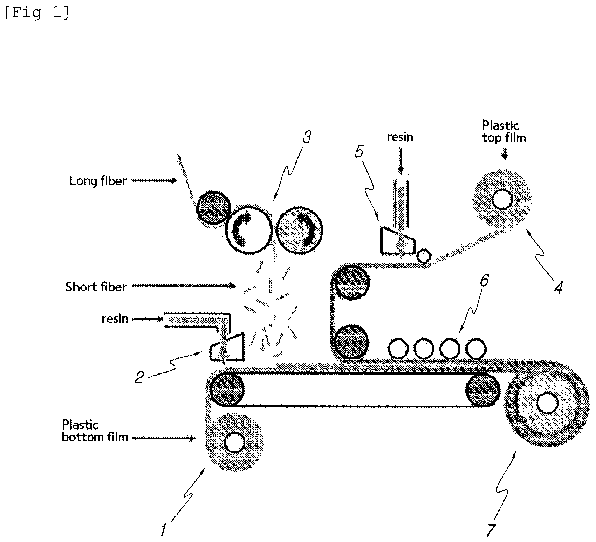

FIG. 1 is a diagram showing a general configuration of an apparatus for manufacturing the SMC. As shown in the diagram, the apparatus for manufacturing the SMC includes a bottom film supplying portion 1 supplying a bottom film made of a plastic, a bottom resin applying portion 2 applying a resin on a surface of the bottom film, a cutter 3 distributing cut glass fibers on the resin applied on the surface of the bottom film in a predetermined thickness, a top film supplying portion 4 supplying a top film made of a plastic on the bottom film distributed with the fibers to be superposed on the bottom film, a top resin applying portion 5 applying a resin on a lower surface of the top film, a film laminating portion 6 pressing and laminating the superimposed top film and bottom film, and a winding portion 7 rolling up the laminated film.

Accordingly, the resin is applied on the surface of the bottom film in a predetermined thickness, and then the glass fibers cut in a short length are uniformly distributed on the resin applied surface to impregnate the glass fiber with the resin such that physical properties of the SMC are improved.

The physical properties of such SMC depend on a type of distributed fibers and the impregnability of resins impregnated into the fibers.

Thus, conventionally, glass fibers having a diameter smaller than that of natural fibers and having excellent physical properties with respect to weight have been mainly used. However, in recent years, manufacture of the SMC using carbon fibers, which are thinner than glass fibers and have excellent physical properties with respect to weight, has increased.

Carbon fibers are produced in a form of a flat yarn in which bundles are formed by twisting 1,000 (1K) to 50,000 (50K) filaments having continuous or predetermined length and having a diameter of 5 µm to 10 µm.

Thus, the carbon fibers used in the manufacture of the SMC are more uniformly impregnated with the resin among the filaments when using small tow carbon fiber in which the number of filaments is 1,000 (1K) to 3,000 (3K), thereby improving the physical properties of the SMC.

However, the carbon fibers are produced by synthesizing reformed carbon with synthetic fibers consisting of up to 300,000 filaments and then the carbon fibers are produced while reducing the number of filaments to 48K, 24K, 12K, 6K, 3K, and 1K. Thus, the smaller the number of filaments, the greater the manufacturing cost.

Therefore, increasing manufacturing cost is required when the SMC is manufactured by using small tow carbon fiber.

Thus, conventionally, by using large tow carbon fibers having the number of 12,000 (12K) to 24,000 (24K) filaments in the production of the SMC, physical properties of products are deteriorated.

That is, since the large tow carbon fibers have a large number of filaments, it is difficult for the resin to penetrate between the filaments and the impregnability thereof is low. Therefore, defects such as pores or resin clustering during molding are increased such that the physical properties and durability of the SMC are deteriorated. In addition, aesthetics thereof are not excellent.

In addition, apparatuses in the related art for manufacturing the SMC are provided with a doctor blade to apply resin on a film surface, the doctor blade squeezing a predetermined amount of resin onto the film surface and then scraping the film to a predetermined thickness using a blade. However, in the case of using the doctor blade, it is difficult to finely coat the resin and precisely control the quantity of the resin.

Thus, in the case of using the doctor blade, the resin coating thickness is uneven depending on the kind of the resin whereby it is difficult to uniformly form the thickness of finished the SMC product. In addition, the coating thickness is adjusted by scraping the resin supplied to the film surface whereby it is impossible to apply the resin after dispersing fibers on the film surface, such that it is impossible to manufacture the SMC having a structure of multi-fiber reinforcing layer.

### Documents of Related Art

(Patent Document 1) Korean Patent No. 10-1459145KR20170103131A discloses preamble of claims 1 and 3.

### SUMMARY OF THE INVENTION

Accordingly, the present invention has been made keeping in mind the above problems occurring in the related art, and the present disclosure is intended to propose a method of and an apparatus for manufacturing a sheet molding compound (SMC) in order to improve resin impregnability by widening a large tow carbon fiber.

In addition, the present invention is to provide a method of and an apparatus for manufacturing an SMC according to claims 1 and 3 in order to improve the resin impregnability, and thus, improving physical properties of a product, by dividing a large tow carbon fiber into multiple strands of small tow carbon fibers.

Furthermore, the present disclosure is to provide a method of and an apparatus for manufacturing an SMC in order to manufacture an SMC having a structure of multi-fiber reinforcing layer by applying a resin by a slot die.

In order to achieve the above object, there is provided a method of manufacturing SMC according to the present invention, the method including: continuously supplying a wound bottom film by unwinding; applying a bottom resin on the supplied bottom film;
continuously supplying a wound large tow carbon fiber by unwinding;
spreading the supplied large tow carbon fiber for widening;
cutting the widened large tow carbon fiber into a predetermined length by supplying to a cutting portion and distributing the cut large tow carbon fiber on the bottom resin;
continuously supplying a wound top film by unwinding;
applying a top resin on a lower surface of the supplied top film; and
stacking the top film, which is supplied upside down to cover the top resin on the carbon fiber distributed on the bottom resin, on the bottom film, and pressing the bottom film and the top film for a predetermined pressure from upper and lower positions to laminate the bottom film and the top film such that the carbon fiber is impregnated with the resin.

At the cutting and distributing of the carbon fiber, the widened large tow carbon fiber may be supplied to multiple cutting portions, which are disposed along a transport direction of the bottom film to be spaced apart from each other, to be distributed at positions spaced apart from each other by a predetermined distance on the bottom resin, with an intermediate resin being applied to be placed between the carbon fibers distributed to be spaced apart from each other.

In addition, the method may further include: multi-dividing the large tow carbon fiber widely spread at the spreading the carbon fiber in a longitudinal direction of the fiber.

In addition, the method may further includes: continuously supplying a wound reinforcing fabric by unwinding and continuously stacking on the bottom resin applied on the bottom film along the longitudinal direction of the bottom film.

In addition, in order to achieve the above object, there is provided an apparatus for manufacturing SMC according to the present invention, the method including: a bottom film supplying portion provided with a film roll and unwinding a bottom film wound on the film roll for supply thereof;
a first slot die applying a bottom resin on the bottom film supplied from the bottom film supplying portion;
a carbon fiber supplying portion provided with a creel and unwinding a large tow carbon fiber wound on the creel for supply thereof;
a spreading portion spreading the large tow carbon fiber supplied from the carbon fiber supplying portion for widening;
a cutting portion cutting the supplied spread carbon fiber into a predetermined length and distributing the cut carbon fiber on the bottom resin;
a top film supplying portion provided with a film roll and unwinding a top film wound on the film roll for supply thereof;
a second slot die applying a top resin on the top film supplied from the top film supplying portion; and
a film laminating portion pressing the top film supplied upside down and the bottom film with a predetermined pressure to laminate.

The cutting portion may be provided with a first cutter and a second cutter, which are disposed to be spaced apart from each other by a predetermined distance,
and the apparatus may further include: a third slot die disposed between the first cutter and the second cutter, and applying an intermediate resin on the carbon fiber, which is cut in a predetermined length by the first cutter and distributed on the bottom resin.

The apparatus may further include: a dividing portion dividing the large tow carbon fiber widely spread by the spreading portion into multiple strands of small tow carbon fiber along the longitudinal direction of the fiber.

The apparatus may further include: a reinforcing fabric supplying portion provided with a fiber roll and unwinding the reinforcing fabric wound on the fiber roll and continuously supplying on the bottom resin applied on the bottom film to stack thereon.

The reinforcing fabric supplying portion may be provided in plural, the multiple reinforcing fabric supplying portions disposed to be spaced apart from each other by predetermined intervals and supplying different types of reinforcing fabrics at the same time from each of the reinforcing fabric supplying portions, and
the cutting portion distributing the cut carbon fiber and a slot die for applying a resin may be disposed between the multiple reinforcing fabric supplying portions.

The reinforcing fabric may be any one among unidirectional (UD) carbon fabric, non-crimp fabric (NCF), carbon fabric, glass fabric, and aramid fabric.

According to a method of and an apparatus for manufacturing SMC of the present disclosure, a large tow carbon fiber is widened by spreading to improve resin impregnability, thereby being capable of manufacturing a high quality SMC with improved physical properties.

In addition, according to the present invention, the large tow carbon fiber is divided into multiple strands of small tow carbon fibers to improve the resin impregnability, thereby enabling manufacture a high quality SMC with improved physical properties.

In addition, according to the present disclosure, as a slot die discharges a resin by a predetermined pressure and applies the resin on a surface of a film, the coating thickness of the resin can be precisely adjusted by control of discharging pressure for the resin. In addition, as the resin can be coated on the film on which the carbon fiber is distributed, it is possible to manufacture an SMC having a structure of multi-fiber reinforcing layer.

Furthermore, a large tow carbon fiber which is low cost is used in the present invention while achieving a high-quality SMC to have same physical properties with a product manufactured with a small tow carbon fiber which is high cost, thereby capable of reducing the manufacturing cost and improving the quality of the product.

### BRIEF DESCRIPTION OF THE DRAWINGS

The above and other objects, features and other advantages of the present disclosure will be more clearly understood from the following detailed description when taken in conjunction wth the accompanying drawings, in which:
FIG. 1 is an exemplary diagram showing a configuration of an apparatus for manufacturing sheet molding compound (SMC) of the related art;
FIG. 2 is a block diagram showing a manufacturing process according to an embodiment of a method of manufacturing an SMC of the present invention;
FIG. 3 is a diagram showing a configuration of an apparatus for manufacturing an SMC according to an embodiment of the present invention;
FIG. 4 is a side cross-sectional view showing a first slot die of the apparatus for manufacturing the SMC according to the embodiment of the present invention;
FIG. 5 is an exemplary plan view showing a spreading portion of the apparatus for manufacturing the SMC according to the embodiment of the present invention;
FIG. 6 is a side cross-sectional view showing a cutting portion of the apparatus for manufacturing the SMC according to the embodiment of the present invention;
FIG. 7 is a side cross-sectional view showing an SMC manufactured by the apparatus for manufacturing the SMC according to the embodiment of the present invention;
FIG. 8 is a diagram showing a configuration of an apparatus for manufacturing an SMC according to a second embodiment of the present invention;
FIG. 9 is a side cross-sectional view showing an SMC manufactured by the apparatus for manufacturing the SMC according to the second embodiment of the present invention;
FIG. 10 is a block diagram showing a manufacturing process according to a third embodiment of a method of manufacturing an SMC of the present invention;
FIG. 11 is a diagram showing a configuration of an apparatus for manufacturing an SMC according to the third embodiment of the present invention;
FIG. 12 is an exemplary plan view showing a dividing portion of the apparatus for manufacturing the SMC according to the third embodiment of the present invention;
FIG. 13 is a block diagram showing a manufacturing process according to a forth embodiment of a method of manufacturing an SMC of the present invention;
FIG. 14 is a diagram showing a configuration of an apparatus for manufacturing an SMC according to the forth embodiment of the present invention; and
FIGS. 15A and 15B are side cross-sectional views showing SMCs manufactured by the apparatus for manufacturing the SMC according to the fourth embodiment of the present invention.

### DETAILED DESCRIPTION OF THE INVENTION

Hereinbelow, a method of and an apparatus for manufacturing a sheet molding compound (SMC) according to the present invention will be described in detail. The present invention may be embodied in many different forms.

Throughout the drawings, the same reference numerals will refer to the same or like parts. Although the terms "first", "second", etc. may be used herein to describe various elements, these elements should not be limited by these terms. These terms are only used to distinguish one element from another element regardless of the importance, sequence, or order of the elements. For instance, a first element discussed below could be termed a second element.

Similarly, the second element could also be termed the first element.

The terminology used herein is for the purpose of describing particular embodiments only and is not intended to be limiting. As used herein, the singular forms "a", "an", and "the" are intended to include the plural forms as well, unless the context clearly indicates otherwise.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

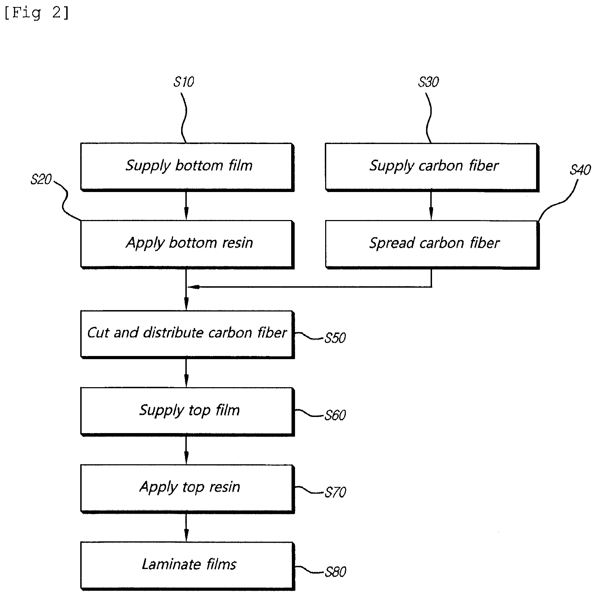

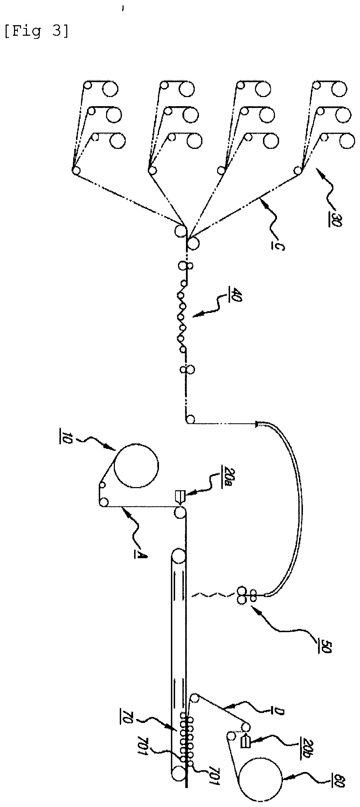

FIG. 2 is a block diagram showing a manufacturing process according to an embodiment of a method of manufacturing an SMC of the present invention; and FIG. 3 is a diagram showing a configuration of an apparatus for manufacturing an SMC according to an embodiment of the present invention.

A detailed description will be described with reference to FIGS. 2 and 3.

The method of manufacturing the SMC of the present invention includes supplying a bottom film (S10), applying a bottom resin (S20), supplying a carbon fiber (S30), spreading the carbon fiber (S40), cutting and distributing the carbon fiber (S50), supplying a top film (S60), applying a top resin (S70), and laminating the films (S80).

At the supplying of the bottom film (S10), the bottom film wound on a film roll is unwound therefrom and supplied continuously.

At the applying of the bottom resin (S20), the bottom resin is applied on a surface of the bottom film, which is continuously supplied at the supplying of the bottom film (S10). Here, using a slot die is preferable to apply the bottom resin.

Accordingly, the surface of the bottom film passing the slot die is provided with the bottom resin applied thereon in a predetermined thickness.

At the supplying of the carbon fiber (S30), a large tow carbon fiber wound on a fiber bobbin is unwound therefrom and supplied continuously.

At the spreading of the carbon fiber (S40), the large tow carbon fiber continuously supplied at the supplying of the carbon fiber (S30) is spread to increase the width thereof. Here, it is preferable to use a spreading machine provided with multiple spreading rollers 401 to widen the large tow carbon fiber.

Processes for the carbon fiber at the supplying of the carbon fiber (S30) and at the spreading of the carbon fiber (S40) are performed on a carbon fiber line which is separate from a film transport line on which processes for the film at the supplying of the bottom film (S10) and at the applying of the bottom resin (S20) are performed. Afterward, the carbon fiber is supplied to the film transport line.

At the cutting and distributing of the carbon fiber (S50), the widened carbon fiber and continuously supplied at the spreading of the carbon fiber (S40) is cut into a predetermined length while distributed on the bottom resin applied on the bottom film. Here, it is preferable to use a cutter provided with a cutting roller 502 to cut the carbon fiber.

Accordingly, the carbon fiber is evenly distributed by free fall on the bottom resin applied on the bottom film whereby the resin impregnability is improved.

At the cutting and distributing of the carbon fiber (S50), the large tow carbon fiber, widened at the spreading of the carbon fiber (S40), may be supplied to multiple cutting portions 50, which are provided to be spaced apart from each other, to be distributed at positions spaced apart from each other by a predetermined distance on the bottom resin.

Here, the multiple cutting portions 50 are provided at the predetermined distance along a transport direction of the bottom film.

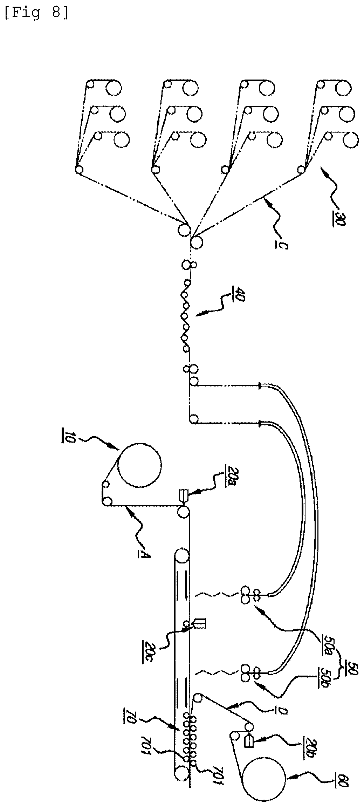

Referring to FIG. 8 is desirable for helping with understanding the above embodiment.

Then, it is preferable that an intermediate resin F is applied to be placed between the carbon fibers by using a slot die, the carbon fibers distributed from the multiple cutting portions 50 provided to be spaced from each other at the predetermined distance. Accordingly, the slot die is preferably provided between the multiple cutting portions 50.

That is, during the transport process of the bottom film in a constant speed, in the case that the multiple cutting portions 50 provided to be spaced from each other distribute the carbon fiber at the positions spaced apart from each other by the predetermined distance on the bottom resin, a front multiple cutting portion 50 of the multiple cutting portions 50 distributes the carbon fiber and then the intermediate resin F discharged from the slot die is applied on the carbon fiber distributed on the bottom resin.

Then, the carbon fiber discharged from a rear cutting portion 50 of the multiple cutting portions 50 is distributed on the intermediate resin F.

Thus, when the bottom film and the top film are laminated by a film laminating portion 70, the carbon fibers are disposed between the bottom resin applied on the bottom film and the top resin applied on a lower surface of the top film and the intermediate resin F.

Accordingly, the pressure applied by the film laminating portion 70 causes the bottom resin, the top resin, and the intermediate resin F to penetrate between filaments of the carbon fibers from the upper, middle, and lower portions of the carbon fibers. Thus, the resin impregnability is greatly improved whereby bubble generation is suppressed in the resin impregnation process, and bubbles that are possibly generated in the resin itself are removed by the pressure applied by the film laminating portion 70, thereby minimizing defects in molding SMC products and improving the physical properties thereof. Meanwhile, at the supplying of the top film (S60), the top film wound on a film roll is unwound therefrom and supplied continuously.

At the applying of the top resin (S70), the top resin is applied on the lower surface of the top film, which is continuously supplied at the supplying of the top film (S60). Here, using a slot die is preferable to apply the top resin.

Accordingly, the lower surface of the top film passing the slot die is provided with the top resin applied thereon in a predetermined thickness.

At the laminating of the films (S80), the top film is stacked on the bottom film, the top film supplied upside down to cover the top resin on the carbon fiber distributed on the bottom resin. Then, the bottom film and the top film pass between laminating rollers 701, which are arranged up and down respectively, at the same time such that the bottom film and the top film are pressurized laminating rollers 701 to laminate.

At this point, the pressure applied by the laminating rollers 701 causes the bottom resin and the top resin to penetrate between the filaments of the carbon fiber from the upper and lower portions of the carbon fiber such that the impregnation of the resin is performed.

The method of manufacturing the SMC of the present invention may further include dividing the carbon fiber (S90) .

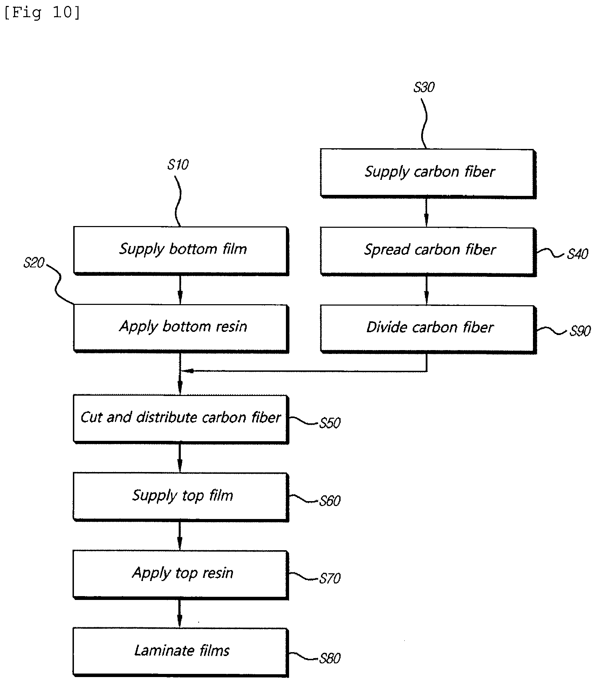

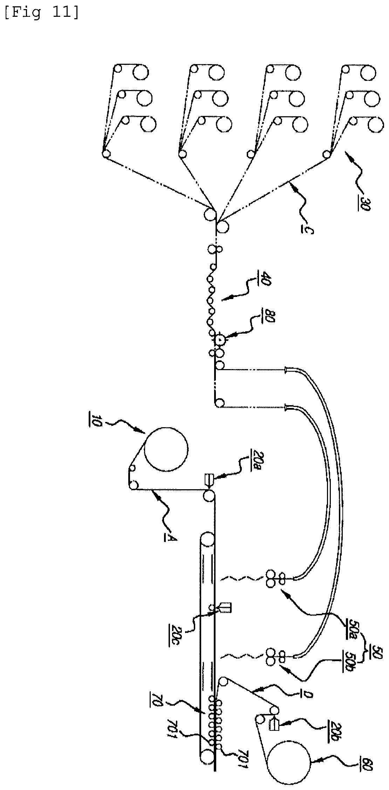

Referring to FIGS. 10 and 11 is desirable for helping with understanding the embodiment.

At the dividing of the carbon fiber (S90), the large tow carbon fiber widely spread at the spreading of the carbon fiber (S40) is multi-divided in the longitudinal direction of the fiber.

It is preferable to use multiple ring knives 801, which are provided at predetermined intervals in a direction perpendicular to the transport direction of the carbon fiber, to multi-divide the large tow carbon fiber in the longitudinal direction of the fiber, but is not limited thereto. As described above, multiple strands of small tow carbon fiber are formed when multi-dividing the large tow carbon fiber in the longitudinal direction of the fiber by using the multiple ring knives 801.

That is, in the case of supplying large tow carbon fiber having 12K to 24K filaments at the supplying of the carbon fiber (S30), after performing the dividing of the carbon fiber (S90), small tow carbon fibers are formed in which the large tow carbon fiber is divided into three to six strands.

Thus, as each of the small tow carbon fibers formed by dividing has 3,000 to 4,000 filaments, the resin impregnability is greatly improved.

In addition, as the small tow carbon fiber is obtained by dividing to have multiple strands and supplied to the cutter for the cutting and distributing of the carbon fiber (S50), the small tow carbon fiber obtained by dividing is cut and distributed, whereby the resin impregnability is improved. The method of manufacturing the SMC of the present invention may further include supplying a reinforcing fabric (S100) .

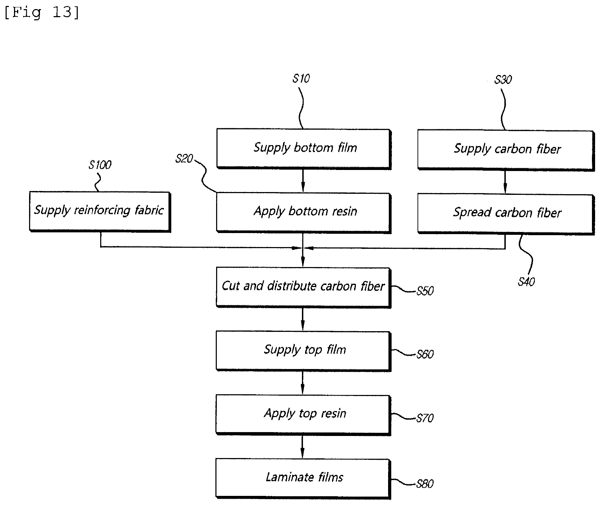

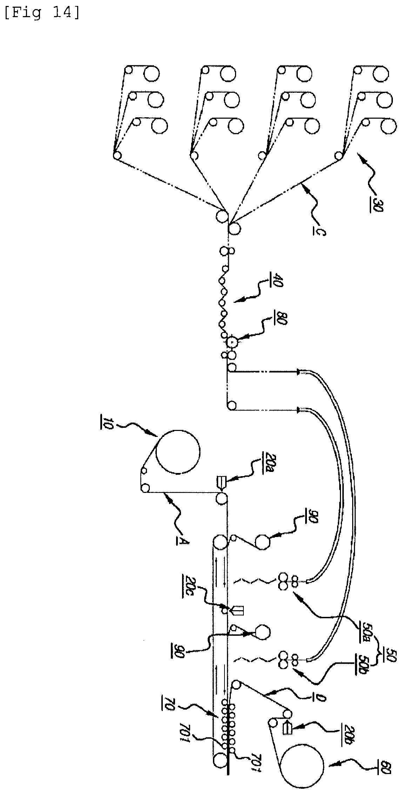

Referring to FIGS. 13 and 14 is desirable for easy understanding of the embodiment.

At the supplying of the reinforcing fabric (S100), the reinforcing fabric wound on a fiber roll is unwound therefrom continuously, and is continuously stacked on the bottom resin applied on the bottom film along the longitudinal direction of the bottom film.

Here, the reinforcing fabric may be any one among unidirectional (UD) carbon fabric, non-crimp fabric (NCF), carbon fabric, glass fabric, and aramid fabric.

A process for the reinforcing fabric at supplying of the reinforcing fabric (S100) is performed on a reinforcing fabric line which is separate from the film transport line on which the processes for the film at the supplying of the bottom film (S10) and at the applying of the bottom resin (S20) are performed. Afterward, the reinforcing fabric is supplied to the film transport line.

As the bottom film and the top film are laminated by pressure of the laminating rollers 701 at the laminating of the films (S80), the reinforcing fabric is impregnated with the resin whereby the physical properties such as tensile strength, bend strength, etc. of the SMC are greatly improved.

That is, the carbon fiber is cut into a predetermined length by a cutter at the cutting and distributing of the carbon fiber (S50) and distributed on the bottom resin in the form of fiber strands such that the carbon fiber having a short length is impregnated with the resin, thereby improving the physical properties and moldability of the SMC.

Meanwhile, the reinforcing fabric supplied at the supplying of the reinforcing fabric (S100) has a form of a fabric with a predetermined width, and is supplied along the longitudinal direction of the bottom film, stacked on the bottom resin, and then impregnated with the resin at the laminating of the films (S80), whereby the physical properties such as tensile strength, bend strength, etc. of the SMC are greatly improved.

Thus, by further performing supplying of the reinforcing fabric (S100), the physical properties such as the tensile strength, the bend strength, etc. of the SMC can be improved.

FIG. 3 is a diagram showing a configuration of an apparatus for manufacturing the SMC according to an embodiment of the present invention.

A detailed description will be described with reference to FIG. 3.

The apparatus for manufacturing the SMC of the present invention includes a bottom film supplying portion 10, a first slot die 20a, a carbon fiber supplying portion 30, a spreading portion 40, a cutting portion 50, a top film supplying portion 60, a second slot die 20b, and a film laminating portion 70.

The bottom film supplying portion 10 is provided with a film roll and unwinds a bottom film wound on the film roll for supply thereof.

It is preferable that the bottom film is a plastic film such as polyethylene (PE), polypropylene (PP), polyvinylidene fluoride (PVDF), and polyethylene terephthalate (PET).

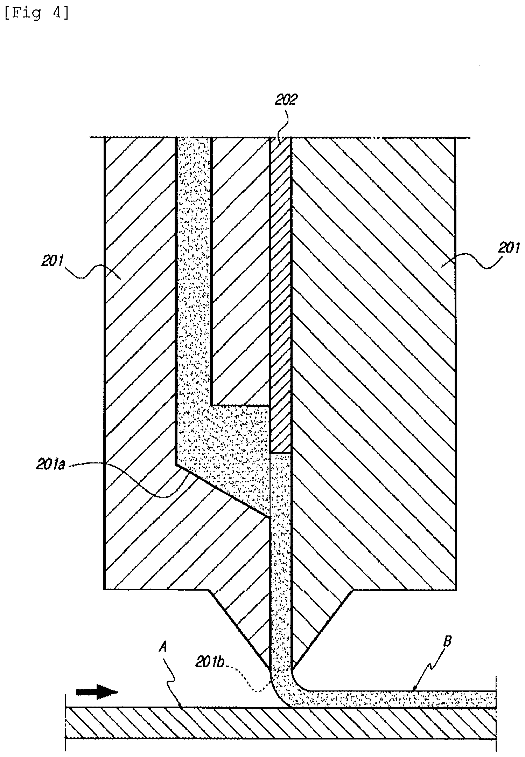

FIG. 4 is a side cross-sectional view showing the first slot die of the apparatus for manufacturing the SMC according to the embodiment of the present invention.

A detailed description will be described with reference to FIGS. 3 to 4.

The first slot die 20a is provided on a transport path of the bottom film supplied from the bottom film supplying portion 10 to apply a bottom resin on the bottom film.

The first slot die 20a includes die blocks 201 and a shim plate 202.

The die blocks 201 are provided as one symmetrical pair, and a first die block 201 is configured with a manifold 201a. A resin supplied by a resin supplier (not shown) is filled in the manifold 201a, and a discharge hole 201b through which the resin is discharged is provided at lower ends of the die blocks 201.

The shim plate 202 is disposed between the pair of die blocks 201, whereby it is possible to precisely control a discharge amount of the resin discharged from the discharge hole 201b of the die blocks 201 by adjusting the thickness or height of the shim plate 202.

In addition, the first slot die 20a applies the resin on the bottom film or on a lower surface of the top film while being spaced apart therefrom at a predetermined distance, whereby it is possible to precisely control the coating thickness of the resin by precise control of the discharge amount of the resin and control of the transport speed of the film.

In particular, with respect to a structure of the first slot die 20a, the discharge hole 201b through which the resin is discharged is structurally configured in a straight line without deviation of the height thereof such that, when the resin is discharged from the discharge hole 201b and applied on the bottom film, it is possible to minimize the thickness deviation of the right and left sides of the resin coated surface.

In addition, by controlling the discharge pressure of the resin, it is possible to discharge very small amount of the resin whereby it is easy to obtain a precise thickness of the resin.

The carbon fiber supplying portion 30 is provided with a creel on which multiple carbon fiber bobbins.are mounted to supply a large tow carbon fiber, which is wound on the carbon fiber bobbins, by unwinding the large tow carbon fiber therefrom.

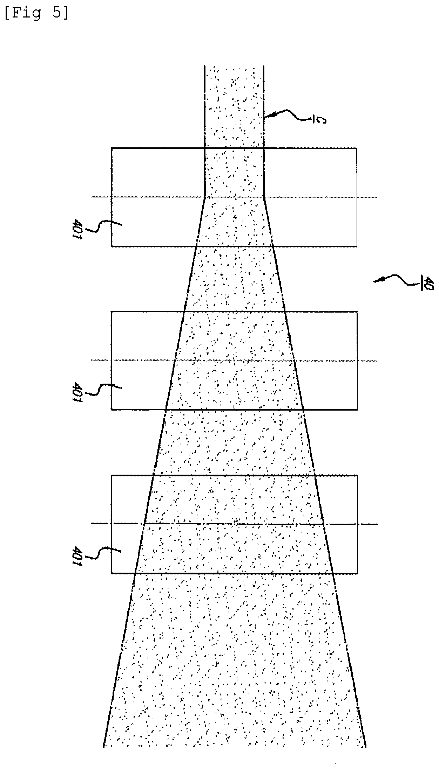

FIG. 5 is an exemplary plan view showing a spreading portion of the apparatus for manufacturing the SMC according to the embodiment of the present invention.

A detailed description will be described with reference to FIGS. 3 to 5.

The spreading portion 40 is provided with the multiple spreading rollers 401, which have a heating means and a vibrating means individually and are spaced apart from each other at predetermined intervals. In addition, the spreading portion 40 spreads the large tow carbon fiber supplied from the carbon fiber supplying portion 30 for widening while transporting the large tow carbon fiber in the longitudinal direction of the fiber.

Here, it is preferable that the large tow carbon fiber supplied from the carbon fiber supplying portion 30 has 12K to 24K filaments, and the width thereof is increased to 15 mm to 25 mm by the spreading portion 40.

Thus, when the large tow carbon fiber supplied from the carbon fiber supplying portion 30 passes through the spreading portion 40, the height thereof is lowered and the width thereof is increased such that spacings between the filaments composing the large tow carbon fiber is increased whereby the resin impregnability is improved.

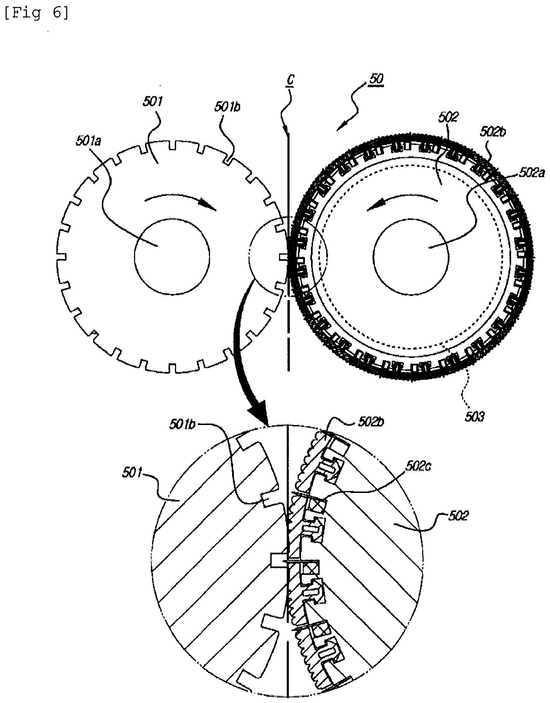

FIG. 6 is a side cross-sectional view showing a cutting portion of the apparatus for manufacturing the SMC according to the embodiment of the present invention.

A detailed description will be described with reference to FIGS. 3 to 6.

The cutting portion 50 cuts the carbon fiber supplied from the spreading portion 40 to be increase the width thereof into a predetermined length and distributes the obtained carbon fiber on the bottom resin applied on the bottom film.

The cutting portion 50 includes a support roller 501, a cutting roller 502, and a drive motor 503, for cutting the carbon fiber.

The support roller 501 is provided with a first rotating shaft 501a, and configured with multiple cutting grooves on an outer circumferential surface thereof in predetermined intervals.

The cutting roller 502 is provided with a second rotating shaft 502a disposed in the same direction with the first rotating shaft 501a, and configured in which multiple pressing members 502b supporting the carbon fiber and multiple cutters 502c cutting the carbon fiber are alternately provided at predetermined intervals on an outer circumferential surface of the cutting roller 502.

The drive motor 503 provides rotating power to the support roller 501 and the cutting roller 502.

Thus, when the carbon fiber widened and transported from the spreading portion 40 is supplied between the support roller 501 and the cutting roller 502, the carbon fiber is held between the pressing members 502b and the outer circumferential surface of the support roller 501. Then, as the support roller 501 and the cutting roller 502 rotate in a direction to engage with each other, the cutters 502c are inserted into the cutting grooves such that the carbon fiber is cut, and the cut carbon fiber falls downward and is distributed on the bottom resin applied on the bottom film.

The top film supplying portion 60 is provided with a film roll and unwinds a top film wound on the film roll for supply thereof.

It is preferable that the top film is the plastic film which is the same material as the bottom film, but it is not limited thereto.

The second slot die 20b is provided on a transport path of the top film supplied from the top film supplying portion 60 to apply a top resin on a lower surface of the top film.

The second slot die 20b has the same structure as the first slot die 20a. As the first slot die 20a, it is possible for the second slot die 20b to precisely control the coating thickness of the resin by precise control of the discharge amount of the resin and control of the transport speed of the film, whereby it is possible to minimize the thickness deviation of the right and left sides of the resin coated surface and to obtain a precise thickness of the resin.

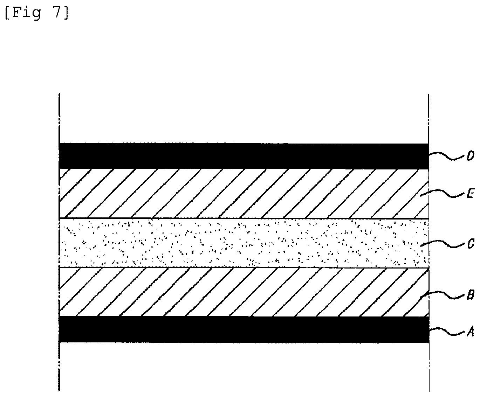

FIG. 7 is a side cross-sectional view showing an SMC manufactured by the apparatus for manufacturing the SMC according to the embodiment of the present invention.

A detailed description will be described with reference to FIGS. 3 to 7.

The film laminating portion 70 passes the top film, which is supplied upside down such that the carbon fiber on the bottom resin is covered with the top resin, and the bottom film between laminating rollers 701 arranged up and down such that the bottom film and the top film are pressurized with a predetermined pressure to laminate.

The carbon fiber (C) is positioned between the bottom resin (B) applied on the bottom film (A) and the top resin (E) applied on the lower surface of the top film (D), and when the bottom film (A) and the top film (D) are laminated by the film laminating portion 70, the pressure applied by the film laminating portion 70 causes the bottom resin (B) and the top resin (E) to penetrate between the filaments of the carbon fiber (C) from the upper and lower portions of the carbon fiber (C) whereby the impregnation of the resin is performed.

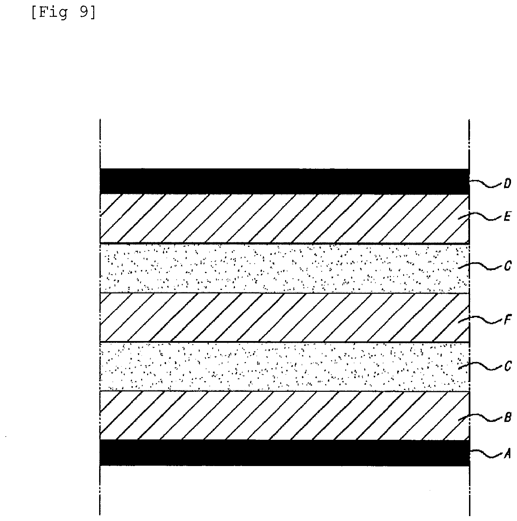

FIG. 8 is a diagram showing a configuration of an apparatus for manufacturing an SMC according to a second embodiment of the present invention, and FIG. 9 is a side cross-sectional view showing an SMC manufactured by the apparatus for manufacturing the SMC according to the second embodiment of the present invention.

A detailed description will be described with reference to FIGS. 8 and 9.

The cutting portion 50 may be provided with a first cutter 50a and a second cutter 50b, and may be further provided with a third slot die 20c.

The first cutter 50a and the second cutter 50b are disposed to be spaced apart from each other by a predetermined distance along the transport direction of the bottom film such that the large tow carbon fiber widened at the spreading portion 40 is separately supplied to the first cutter 50a and the second cutter 50b.

Therefore, in the case that the carbon fiber cut into the predetermined length by the first cutter 50a and the second cutter 50b is distributed on the bottom resin applied on the bottom film, the carbon fiber is distributed at a predetermined distance such that it is possible to suppress a concentration and an orientation of the distributed carbon fiber, thereby enabling uniform distribution of the carbon fiber.

That is, in the manufacturing process of SMC, the carbon fiber is distributed uniformly rather than being stacked in one place, whereby the resin impregnability is improved, which is advantageous for improving the physical properties of the SMC.

In the case of distributing the cut carbon fiber at a single point, when a predetermined amount, for example, 100 g of cut carbon fiber, is to be distributed on the bottom resin of a 1 m section applied on the bottom film being transported at a constant speed, the concentration and the orientation of the carbon fiber to be distributed are increased due to the large amount of the distributed carbon fiber at the single point such that the distribution of the carbon fiber is limited, which may limit the improvement of the resin impregnability.

On the other hand, in the case of distributing the cut carbon fiber at multiple points for dividing the distribution amount of the carbon fiber, when a predetermined amount, for example, 100 g of cut carbon fiber, is to be distributed on the bottom resin of a 1 m section applied on the bottom film being transported at a constant speed, 50 g of the cut carbon fiber is individually distributed at the multiple points such that the concentration and the orientation of the carbon fiber are decreased because the amount of the carbon fiber distributed at the single point is reduced.

That is, when the carbon fiber is distributed at the first cutter 50a and the second cutter 50b, which are disposed to be spaced apart from each other, in the process of transporting the bottom film at a constant speed, the total carbon fiber distribution amount is the same but the total distribution amount is divided into two. As a result, as the concentration and the orientation of the distributed carbon fiber are decreased, it is possible to distribute the carbon fiber uniformly, thereby further improving the resin impregnability.

The third slot die 20c is disposed between the first cutter 50a and the second cutter 50b, which are disposed to be spaced apart from each other by the predetermined distance, and when the each of the first cutter 50a and the second cutter 50b distributes the carbon fiber, the third slot die 20c applies an intermediate resin F while disposed between the first cutter 50a and the second cutter 50b.

That is, in the process of transporting the bottom film at a constant speed, after the carbon fiber discharged from the first cutter 50a is distributed on the bottom resin applied on the bottom film, the intermediate resin F discharged from the third slot die 20c is applied on the carbon fiber distributed on the bottom resin, and then, the carbon fiber discharged from the second cutter 50b is distributed on the intermediate resin F.

Thus, when the bottom film and the top film are laminated by the film laminating portion 70, the carbon fiber is positioned between the bottom resin applied on the bottom film and the top resin applied on the lower surface of the top film and the intermediate resin F.

Accordingly, the pressure applied by the film laminating portion 70 causes the bottom resin, the top resin, and the intermediate resin F to penetrate between the filaments of the carbon fiber from the upper, middle, and lower portions of the carbon fiber. Thus, the resin impregnability is greatly improved whereby bubble generation is suppressed in the resin impregnation process, and bubbles that are possibly generated in the resin itself are removed by the pressure applied by the film laminating portion 70, thereby minimizing defects in molding SMC products and improving the physical properties thereof.

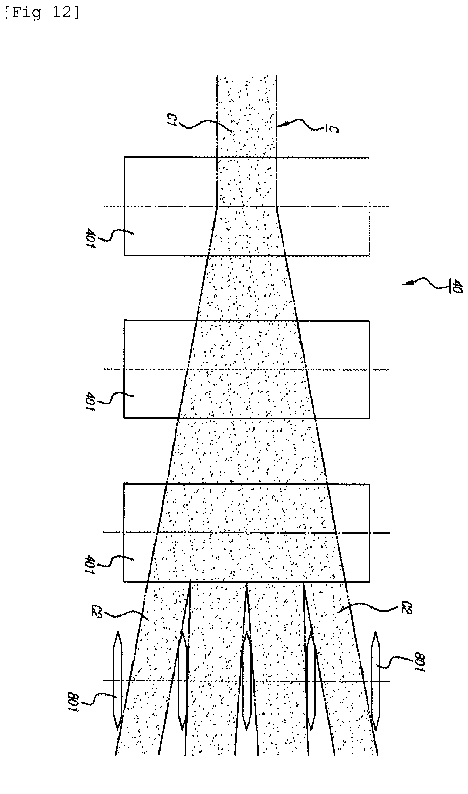

FIG. 10 is a block diagram showing a manufacturing process according to a third embodiment of a method of manufacturing an SMC of the present invention; FIG. 11 is a diagram showing a configuration of an apparatus for manufacturing an SMC according to the third embodiment of the present invention; and FIG. 12 is an exemplary plan view showing a dividing portion of the apparatus for manufacturing the SMC according to the third embodiment of the present invention;

A detailed description will be described with reference to FIGS. 10 to 12.

The apparatus for manufacturing the SMC may be further provided with a dividing portion 80.

The dividing portion 80 includes multiple ring knives 801, which are provided at predetermined intervals in a direction perpendicular to the longitudinal direction of the fiber.

The dividing portion 80 divides the large tow carbon fiber widely spread by the spreading portion 40 into multiple strands by using the multiple ring knives 801 along the longitudinal direction of the fiber to obtain multiple strands of small tow carbon fiber.

Here, it is preferable that the large tow carbon fiber having 12K to 24K filaments and supplied from the carbon fiber supplying portion 30 is divided into three to six strands.

Thus, in the process of supplying the widely spread carbon fiber to the cutting portion 50, it is possible to prevent the widely spread carbon fiber from combining again due to entanglement of the filaments.

In addition, by dividing the large tow carbon fiber into the multiple strands of small tow carbon fiber to supply to the cutting portion 50, despite the possibility that the carbon fiber is combined due to entanglement of the filaments in the process of supplying the carbon fiber, the resin impregnability is improved compared to the case of using the large tow carbon fiber because the small tow carbon fiber has a small number of filaments.

Meanwhile, with respect to dividing the large tow carbon fiber by using the dividing portion 80, dividing into two strands has an effect such that efficiency is low compared to additional processes. On the other hand, when dividing the large tow carbon fiber into seven or more strands, the amount of dust generated in the dividing process of the large tow carbon fiber is increased such that additional dust processing equipment is required to handle the dust whereby the manufacturing cost is increased due to the operation of the dust processing equipment.

Furthermore, in the process of dividing the large tow carbon fiber by using the dividing portion 80, the filaments composing the carbon fiber may be cut off. When dividing the filaments into seven or more strands, the amount of cut filaments may increase.

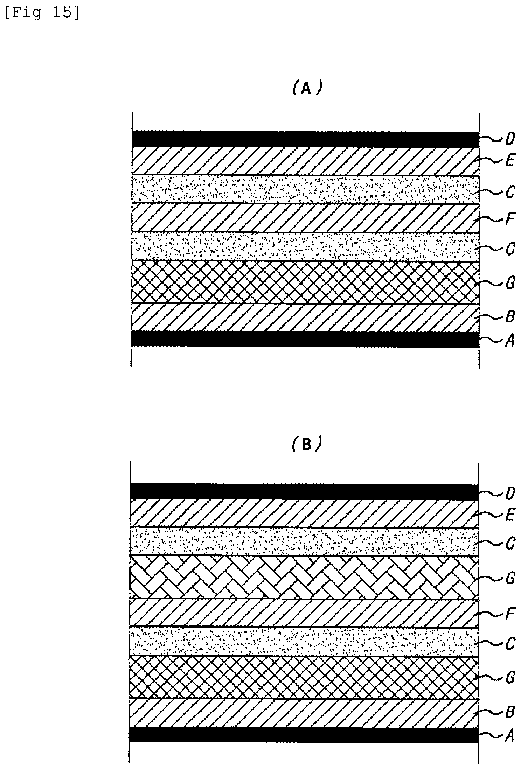

FIG. 13 is a block diagram showing a manufacturing process according to a forth embodiment of a method of manufacturing an SMC of the present invention; FIG. 14 is a diagram showing a configuration of an apparatus for manufacturing an SMC according to the forth embodiment of the present invention; and FIGS. 15A and 15B are side cross-sectional views showing SMCs manufactured by the apparatus for manufacturing the SMC according to the fourth embodiment of the present invention.

A detailed description will be described with reference to FIGS. 13, 14, 15A, and 15B.

The apparatus for manufacturing the SMC may be further provided with a reinforcing fabric supplying portion 90.

The reinforcing fabric supplying portion 90 is provided with a fiber roll, and supplies the reinforcing fabric wound on the fiber roll by unwinding, and continuously stacks the unwound reinforcing fabric on the bottom resin applied on the bottom film along the longitudinal direction of the bottom film.

In addition, multiple reinforcing fabric supplying portions 90 may be disposed to be spaced apart from each other, the multiple reinforcing fabric supplying portions 90 supplying different types of reinforcing fabrics at the same time.

Here, it is preferable that the reinforcing fabric supplying portions 90 are disposed to be spaced apart from each other by predetermined intervals along the transport direction of the bottom film, and the cutting portion 50 distributing the cut carbon fiber and the slot die applying the resin are disposed between the multiple reinforcing fabric supplying portions 90.

The reinforcing fabric may be any one among unidirectional (UD) carbon fabric, non-crimp fabric (NCF), carbon fabric, glass fabric, and aramid fabric. Thus, as the bottom film and the top film are laminated by the pressure of the laminating rollers 701 of the film laminating portion 70, the reinforcing fabric is impregnated with the resin whereby the physical properties such as tensile strength, bend strength, etc. of the SMC are greatly improved.

That is, as the reinforcing fabric having a form of a fabric with a predetermined width is supplied along the longitudinal direction of the bottom film and stacked on the bottom resin, the physical properties such as tensile strength, bend strength, etc. of the SMC product with the reinforcing fabric are greatly improved compared to SMC manufactured by impregnating only the carbon fiber cut into the predetermined length with the resin.

Although the preferred embodiments of the present invention have been described for illustrative purposes, and should not be construed as being restrictive. Those skilled in the art will appreciate that various modifications, additions and substitutions are possible, wherein the scope of protection is defined in appended claims.

## Claims

1. A method of manufacturing a sheet molding compound (SMC), the method comprising:
continuously supplying a wound bottom film by unwinding (S10) ;
applying a bottom resin on the supplied bottom film (S20);
continuously supplying a wound large tow carbon fiber by unwinding (S30);
spreading the supplied large tow carbon fiber for widening (S40);
cutting the widened large tow carbon fiber into a predetermined length by supplying to a cutting portion (50) and distributing the cut large tow carbon fiber on the bottom resin (S50);
continuously supplying a wound top film by unwinding (S60) ;
applying a top resin on a lower surface of the supplied top film (S70); and
stacking the top film, which is supplied upside down to cover the top resin on the carbon fiber distributed on the bottom resin, on the bottom film, and pressing the bottom film and the top film for a predetermined pressure from upper and lower positions to laminate the bottom film and the top film such that the carbon fiber is impregnated with the resin (S80);
**characterized in that** at the cutting and distributing of the carbon fiber (S50), the widened large tow carbon fiber is supplied to multiple cutting portions (50), which are disposed along a transport direction of the bottom film to be spaced apart from each other, to be distributed at positions spaced apart from each other by a predetermined distance on the bottom resin, with an intermediate resin being applied to be placed between the carbon fibers distributed to be spaced apart from each other; and wherein the method further comprises
multi-dividing the large tow carbon fiber widely spread at the spreading the carbon fiber (S40) in a longitudinal direction of the fiber (S90) and forming three to six strands of small tow carbon fibers.

2. The method of claim 1, further comprising:
continuously supplying a wound reinforcing fabric by unwinding and continuously stacking on the bottom resin applied on the bottom film along the longitudinal direction of the bottom film (S100).

3. An apparatus for manufacturing an SMC, the apparatus comprising:
a bottom film supplying portion (10) provided with a film roll and unwinding a bottom film wound on the film roll for supply thereof;
a first slot die (20a) applying a bottom resin on the bottom film supplied from the bottom film supplying portion (10) ;
a carbon fiber supplying portion (30) provided with a creel and unwinding a large tow carbon fiber wound on the creel for supply thereof;
a spreading portion (40) spreading the large tow carbon fiber supplied from the carbon fiber supplying portion (30) for widening;
a cutting portion (50) cutting the supplied spread carbon fiber into a predetermined length and distributing the cut carbon fiber on the bottom resin;
a top film supplying portion (60) provided with a film roll and unwinding a top film wound on the film roll for supply thereof;
a second slot die (20b) applying a top resin on the top film supplied from the top film supplying portion (60); and
a film laminating portion (70) pressing the top film supplied upside down and the bottom film with a predetermined pressure to laminate; **characterized in that** the cutting portion (50) is provided with a firt cutter (50a) and a second cutter (50b), which are disposed to be spaced apart from each other by a predetermined distance, and
the apparatus further includes:
a third slot die (20c) disposed between the first cutter (50a) and the second cutter (50b), and applying an intermediate resin on the carbon fiber, which is cut in a predetermined length by the first cutter (50a) and distributed on the bottom resin; and wherein the apparatus further comprises:
a dividing portion (80) dividing the large tow carbon fiber widely spread by the spreading portion (40) into multiple strands of small tow carbon fiber along the longitudinal direction of the fiber.

4. The apparatus of claim 3, further comprising:
a reinforcing fabric supplying portion (90) provided with a fiber roll and unwinding the reinforcing fabric wound on the fiber roll and continuously supplying on the bottom resin applied on the bottom film to stack thereon.

5. The apparatus of claim 4, wherein the reinforcing fabric supplying portion (90) is provided in plural, the multiple reinforcing fabric supplying portions (90) disposed to be spaced apart from each other by predetermined intervals and supplying different types of reinforcing fabrics at the same time from each of the reinforcing fabric supplying portions (90), and
the cutting portion (50) distributing the cut carbon fiber and a slot die for applying a resin are disposed between the multiple reinforcing fabric supplying portions (90).

6. The apparatus of claim 4 or 5, wherein the reinforcing fabric is any one among unidirectional (UD) carbon fabric, non-crimp fabric (NCF), carbon fabric, glass fabric, and aramid fabric.

## Patentansprüche

1. Verfahren zur Herstellung einer SMC-Formmasse, wobei das Verfahren umfasst:
kontinuierliches Zuführen einer gewickelten Unterfolie durch Abwickeln (S10);
Auftragen eines Unterharzes auf die zugeführte Unterfolie (S20);
kontinuierliches Zuführen einer gewickelten Large-Tow-Kohlefaser durch Abwickeln (S30);
Ausbreiten der zugeführten Large-Tow-Kohlefaser zum Verbreitern (S40);
Schneiden der verbreiterten Large-Tow-Kohlefaser in einer vorbestimmten Länge, indem man sie einem Schneidteil (50) zuführt, und Verteilen der geschnittenen Large-Tow-Kohlefaser auf dem Unterharz (S50);
kontinuierliches Zuführen einer gewickelten Oberfolie durch Abwickeln (S60);
Auftragen eines Oberharzes auf eine untere Fläche der zugeführten Oberfolie (S70); und
Stapeln der Oberfolie, die umgekehrt zugeführt wird, um das Oberharz zu bedecken, auf die Kohlefaser, die auf dem Unterharz verteilt ist, auf der Unterfolie und Pressen der Unterfolie und der Oberfolie unter einem vorbestimmten Druck aus einer oberen und unteren Position, um die Unterfolie und die Oberfolie zu laminieren, so dass die Kohlefaser mit dem Harz imprägniert wird (S80);
**dadurch gekennzeichnet, dass** beim Schneiden und Verteilen der Kohlefaser (S50) die verbreiterte Large-Tow-Kohlefaser mehreren Schneidteilen (50) zugeführt wird, die entlang einer Transportrichtung der Unterfolie so angeordnet sind, dass sie voneinander beabstandet sind, damit sie auf um einen vorbestimmten Abstand voneinander beabstandeten Positionen auf dem Unterharz verteilt werden, wobei ein Zwischenharz aufgetragen wird, um es zwischen den Kohlefasern zu platzieren, die so verteilt sind, dass sie voneinander beabstandet sind; und wobei das Verfahren weiterhin umfasst:
mehrfaches Zerteilen der Large-Tow-Kohlefaser, die beim Ausbreiten der Kohlefaser (S40) breit ausgebreitet wurde, in einer Längsrichtung der Faser (S90) und Bilden von drei bis sechs Strängen von Small-Tow-Kohlefasern.

2. Verfahren gemäß Anspruch 1, weiterhin umfassend:
kontinuierliches Zuführen einer gewickelten Verstärkungsware durch Abwickeln und kontinuierliches Stapeln auf dem Unterharz, das auf die Unterfolie aufgetragen ist, in der Längsrichtung der Unterfolie (S100).

3. Vorrichtung zur Herstellung einer SMC-Formmasse, wobei die Vorrichtung umfasst:
ein Unterfolie-Zuführungsteil (10), das mit einer Folienrolle versehen ist und eine auf der Folienrolle aufgewickelte Unterfolie abwickelt, um sie zuzuführen;
eine erste Schlitzdüse (20a), die ein Unterharz auf die von dem Unterfolie-Zuführungsteil (10) zugeführte Unterfolie aufträgt;
ein Kohlefaser-Zuführungsteil (30), das mit einem Gatter versehen ist und eine auf dem Gatter aufgewickelte Large-Tow-Kohlefaser abwickelt, um sie zuzuführen;
ein Ausbreitungsteil (40), das die von dem Kohlefaser-Zuführungsteil (30) zugeführte Large-Tow-Kohlefaser ausbreitet, um sie zu verbreitern;
ein Schneidteil (50), das sie zugeführte ausgebreitete Kohlefaser in einer vorbestimmten Länge schneidet und die geschnittene Kohlefaser auf dem Unterharz verteilt;
ein Oberfolie-Zuführungsteil (60), das mit einer Folienrolle versehen ist und eine auf der Folienrolle aufgewickelte Oberfolie abwickelt, um sie zuzuführen;
eine zweite Schlitzdüse (20b), die ein Oberharz auf die von dem Oberfolie-Zuführungsteil (60) zugeführte Oberfolie aufträgt; und
ein Folienlaminierteil (70), das die umgekehrt zugeführte Oberfolie und die Unterfolie unter einem vorbestimmten Druck presst, um sie zu laminieren;
**dadurch gekennzeichnet, dass** das Schneidteil (50) mit einem ersten Schneider (50a) und einem zweiten Schneider (50b) versehen ist, die so angeordnet sind, dass sie um einen vorbestimmten Abstand voneinander beabstandet sind, und
die Vorrichtung weiterhin umfasst:
eine dritte Schlitzdüse (20c), die sich zwischen dem ersten Schneider (50a) und dem zweiten Schneider (50b) befindet und ein Zwischenharz auf die Kohlefaser aufträgt, die von dem ersten Schneider (50a) in einer vorbestimmten Länge geschnitten und auf dem Bodenharz verteilt wird; und wobei die Vorrichtung weiterhin umfasst:
einen Zerteilungsteil (80), der die Large-Tow-Kohlefaser, die durch das Ausbreitungsteil (40) breit ausgebreitet wurde, in der Längsrichtung der Faser in mehrere Stränge von Small-Tow-Kohlefasern zerteilt.

4. Vorrichtung gemäß Anspruch 3, weiterhin umfassend:
ein Verstärkungsware-Zuführungsteil (90), das mit einer Folienrolle versehen ist und die auf der Folienrolle aufgewickelte Verstärkungsware abwickelt und sie kontinuierlich auf das Unterharz, das auf die Unterfolie aufgetragen wurde, zuführt, um sie darauf zu stapeln.

5. Vorrichtung gemäß Anspruch 4, wobei das Verstärkungsware-Zuführungsteil (90) mehrfach bereitgestellt ist, wobei die mehreren Verstärkungsware-Zuführungsteile (90) so angeordnet sind, dass sie um vorbestimmte Abstände voneinander beabstandet sind, und von den Verstärkungsware-Zuführungsteilen (90) jeweils verschiedene Typen von Verstärkungswaren gleichzeitig zugeführt werden; und
das Schneidteil (50), das die geschnittene Kohlefaser verteilt, und eine Schlitzdüse zum Auftragen eines Harzes zwischen den mehreren Verstärkungsware-Zuführungsteilen (90) angeordnet sind.

6. Vorrichtung gemäß Anspruch 4 oder 5, wobei die Verstärkungsware aus einem unidirektionalen (UD) Carbongewebe, einem Gelege (NCF), einem Carbongewebe, einem Glasgewebe und Aramidgewebe ausgewählt ist.

## Revendications

1. Procédé pour fabriquer un préimprégné en feuille (SMC), le procédé comprenant les étapes consistant à :
alimenter en continu un film inférieur enroulé en le déroulant (S10),
appliquer une résine inférieure sur le film inférieur alimenté (S20),
alimenter en continu une fibre de carbone de grande taille enroulée en la déroulant (S30),
étaler la fibre de carbone de grande taille alimenté pour élargissement (S40),
couper la fibre de carbone de grande taille élargie en une longueur prédéterminée en l'alimentant à une pièce coupante (50), et distribuer la fibre de carbone de grande taille coupée sur la résine inférieure (S50),
alimenter en continu un film supérieur enroulé en le déroulant (S60),
appliquer une résine supérieure sur une surface inférieure du film supérieur alimenté (S70), et
empiler le film supérieur, qui est alimenté à l'envers pour couvrir la résine supérieure sur la fibre de carbone distribuée sur la résine inférieure, sur le film inférieur, et comprimer le film inférieur et le film supérieur sous une pression prédéterminée par des positions dessus et dessous pour laminer le film inférieur et le film supérieur de manière que la fibre de carbone soit imprégnée avec la résine (S80),
**caractérisé en ce que**, dans l'étape consistant à couper et distribuer la fibre de carbone (S50), la fibre de carbone de grande taille élargie est alimentée à multiples pièces coupantes (50), qui sont disposées en une direction de transport du film inférieur de manière à être espacées l'une de l'autre, pour être distribuées à des positions espacées l'une de l'autre d'une distance prédéterminée sur la résine inférieure, une résine intermédiaire étant appliquée pour être placée entre les fibres de carbone distribuées de manière à être espacées l'une de l'autre, et dans lequel ledit procédé comprend en outre l'étape consistant à
diviser multiplement la fibre de carbone de grande taille largement étalée dans l'étape consistant à étaler la fibre de carbone (S40) dans une direction longitudinale de la fibre (S90), et former trois à six faisceaux de fibres de carbone de petite taille.

2. Procédé selon la revendication 1, comprenant en outre l'étape consistant à :
alimenter en continu un tissu de renforcement enroulé en le déroulant, et empiler en continu sur la résine inférieure appliquée sur le film inférieur dans une direction longitudinale du film inférieur (S100).

3. Dispositif pour fabriquer un préimprégné en feuille, le dispositif comprenant :
une pièce d'alimentation de film inférieur (10) pourvue d'une bobine de film et déroulant un film inférieur enroulé sur la bobine de film pour l'alimenter,
une première filière à fente (20a) appliquant une résine inférieure sur le film inférieur alimenté de ladite pièce d'alimentation de film inférieur (10),
une pièce d'alimentation de fibre de carbone (30) pourvue d'un cantre et déroulant une fibre de carbone de grande taille enroulée sur ledit cantre pour l'alimenter,
une pièce d'étalement (40) étalant la fibre de carbone de grande taille alimentée de ladite pièce d'alimentation de fibre de carbone (30) pour élargissement,
une pièce coupante (50) coupant la fibre de carbone alimentée en une longueur prédéterminée et distribuant la fibre de carbone coupée sur la résine inférieure,
une pièce d'alimentation de film supérieur (60) pourvue d'une bobine de film et déroulant un film supérieur enroulé sur la bobine de film pour l'alimenter,
une deuxième filière à fente (20b) appliquant une résine supérieure sur le film supérieur alimenté de ladite pièce d'alimentation de film inférieur (60), et
une pièce de lamination de films (70) comprimant le film supérieur alimenté à l'envers et le film inférieur sous une pression prédéterminée pour les laminer,
**caractérisé en ce que** la pièce coupante (50) est procurée d'une première coupeuse (50a) et d'une deuxième coupeuse (50b), qui sont disposées de manière à être espacées l'une de l'autre d'une distance prédéterminée, et
le dispositif comprend en outre :
une troisième filière à fente (20c) disposée entre la première coupeuse (50a) et la deuxième coupeuse (50b), et appliquant une résine intermédiaire sur la fibre de carbone, qui est coupée en une longueur prédéterminée par la première coupeuse (50a) et distribuée sur la résine inférieure, et dans lequel le dispositif comprend en outre :
une pièce de division (80) divisant la fibre de carbone de grande taille largement étalée par la pièce d'étalement (40) en faisceaux multiples de fibres de carbone de petite taille dans la direction longitudinale de la fibre.

4. Dispositif selon la revendication 3, comprenant en outre :
une pièce d'alimentation de tissu de renforcement (90) pourvue d'une bobine de fibre et déroulant le tissu de renforcement enroulé sur la bobine de fibre, et l'alimentant en continu sur la résine inférieure appliquée sur le film inférieur pour être empilée là-dessus.

5. Dispositif selon la revendication 4, dans lequel la pièce d'alimentation de tissu de renforcement (90) est procurée multiplement, les pièces d'alimentation de tissu de renforcement multiples (90) étant disposées de manière à être espacées l'une de l'autre de distances prédéterminées, et alimentant de différents types de tissus de renforcement simultanément de chaque pièce d'alimentation de tissu de renforcement (90), et
la pièce coupante (50) distribuant la fibre de carbone coupée et une filière à fente pour appliquer une résine sont disposées entre les pièces d'alimentation de tissu de renforcement multiples (90).

6. Dispositif selon la revendication 4 ou 5, dans lequel le tissu de renforcement est l'un quelconque parmi un tissu de carbone unidirectionnel (UD), un tissu sans frisures (NCF), un tissu de carbone, un tissu de verre, et un tissu d'aramide.
